# EUROPÄISCHE PATENTSCHRIFT

(11) **EP 3 898 470 B1**
(45) Veröffentlichungstag und Bekanntmachung des Hinweises auf die Patenterteilung: **22.05.2024**
(21) Anmeldenummer: 19809765.1
(22) Anmeldetag: 22.11.2019
(51) Int. Cl.: B65G 43/08, B65G 47/51, B65G 47/71

(54) **BEHÄLTERBEHANDLUNGSANLAGE UND -VERFAHREN FÜR BEHÄLTER**
CONTAINER TREATMENT PLANT AND PROCESS FOR CONTAINERS
INSTALLATION DE TRAITEMENT DES CONTENEURS ET PROCÉDÉ POUR LES CONTENEURS

(30) Priorität: 18.12.2018 DE 102018222194
(43) Veröffentlichungstag der Anmeldung: 27.10.2021
(73) Patentinhaber: Krones AG, 93073 Neutraubling (DE)
(72) Erfinder: HAHN, Wolfgang, 93073 Neutraubling (DE); SCHOBER, Stefan, 93073 Neutraubling (DE)
(74) Vertreter: Grünecker Patent- und Rechtsanwälte PartG mbB
(86) Internationale Anmeldenummer: PCT/EP2019/082306
(87) Internationale Veröffentlichungsnummer: WO 2020/126315

(56) Entgegenhaltungen:
- EP-A1- 3 501 676
- FR-A1- 2 993 870
- US-A- 5 538 054
- US-A1- 2014 332 344

## Beschreibung

Die Erfindung betrifft eine Behälterbehandlungsanlage und ein Behälterbehandlungsverfahren für Behälter mit den Merkmalen des Oberbegriffs von Anspruch 1 bzw. 7.

Üblicherweise umfassen derartige Behälterbehandlungsanlagen eine Transporteinrichtung und wenigstens ein daran angeordnetes Behandlungsaggregat zur Behandlung der Behälter. Beispielsweise kann es sich dabei um eine Getränkeverarbeitungsanlage mit mehreren Transporteuren und einem daran angeordneten Füller zum Abfüllen eines flüssigen Produkts, einem Verschließer zum Verschließen der Behälter und/oder einer Verpackungsmaschine zur Verpackung mehrerer der Behälter als Gebinde handeln.

Um die Qualität der behandelten Behälter zu überprüfen, sind Inspektionsstationen zur Onlineinspektion bekannt, die online alle behandelten Behälter überprüfen, beispielsweise auf die Füllhöhe hin.

Zudem sind Inspektionsvorrichtungen zur Offlineinspektion bekannt, mit denen einzelne behandelte Behälter lediglich stichprobenartig überprüft werden, da sie dabei beispielsweise zerstört werden müssen oder eine zeitaufwendige Messung erfolgen muss. Dies ist beispielsweise bei der CO₂-Messung der Fall, da sich hier der Innendruck im Behälter vor der Messung zunächst bilden muss.

Dazu werden die einzelnen behandelten Behälter üblicherweise automatisch oder manuell aus dem Behälterstrom der Transporteinrichtung an einem zweiten Transportabschnitt ausgeschleust, beispielsweise über einen Bypass, und wenigstens einer Inspektionsvorrichtung zur Inspektion der einzelnen behandelten Behälter zugeführt. Anschließend werden die inspizierten Behälter über den Bypass wieder in den Hauptbehälterstrom eingeschleust. Dies erfordert bei der automatisierten Offlineinspektion einen entsprechenden Aufwand und Platzbedarf.

Die DE 10 2017 203 729 B3 offenbart eine Speicher- und Verteilereinheit, eine Abfüllanlage sowie ein Verfahren zum Speichern und Verteilen gefüllter Behälter. Demnach ist ein Speicher für einzelne Behälter, mit einem Behälterzulauf zum Anschluss an einen Ausleitstrang einer Abfülllinie und mit einem Behälterauslauf zum Anschluss an Inspektionseinheiten vorhanden. Zudem umfasst die Speicher- und Verteilereinheit einen Roboter zum einspeichern befüllter Behälter durch Übergabe von Behältern aus dem Behälterzulauf in den Speicher sowie zum Aussprechen der Behälter durch Übergabe von dem Speicher zum Behälterauslauf.

Allerdings müssen die einzelnen behandelten Behälter dazu zunächst vom Hauptbehälterstrom auf den Ausleitstrang ausgeleitet werden.

Zudem ist von der Firma FT-System ein Roboter mit einem speziellen Greifer für zwei Behälter bekannt, mit dem ein einzelner behandelter Behälter aus dem Hauptbehälterstrom zur Offlineinspektion entnommen und dabei unmittelbar durch einen bereits inspizierten Behälter ersetzt wird. Allerdings ist das bekannte Robotersystem durch die Bewegungsgeschwindigkeit des Roboterarms und durch den geschlossenen Inspektionszyklus in seiner Leistung und Funktion und damit in seiner Flexibilität eingeschränkt.

Die FR 2 993 870 A1 offenbart eine mehrkanalige Fördervorrichtung mit Einlasskanälen zur Aufnahme von aufeinanderfolgenden Gegenständen, einem am Steuerteil angebrachten Greifkopf zur Steuerung der Freigabe von Gegenständen und einem Roboter, der den Greifkopf zwischen den Einlasskanälen und den Auslasskanälen bewegt. Die FR 2 993 870 A1 offenbart eine Anlage und ein Verfahren gemäss den Oberbegriffen der Ansprüche 1 und 7.

Die US 5 538 054 A offenbart ein Verfahren und Vorrichtung zum Füllen von durchsichtigen Getränkebehältern.

Die US 2014/332344 A1 offenbart ein Vereinzelungssystem zur Depalettierung und zum Produkttransport.

Die EP 3 501 676 A1 offenbart eine Flaschenreinigungsmaschine zum Reinigen von Flaschen. Aufgabe der vorliegenden Erfindung ist es daher, eine Behälterbehandlungsanlage und ein -Verfahren bereitzustellen, die eine flexiblere Behälterinspektion ermöglichen, einen geringeren Platzbedarf haben und die weniger aufwendig sind.

Zur Lösung dieser Aufgabenstellung stellt die Erfindung eine Behälterbehandlungsanlage mit den Merkmalen des Anspruchs 1 bereit. Vorteilhafte Ausführungsformen der Erfindung sind in den Unteransprüchen genannt.

Dadurch, dass der zweite Transportabschnitt zum Transport eines gegenüber dem ersten Transportabschnitt verbreiterten Behälterstroms ausgebildet ist, können die behandelten Behälter bei gleichem Durchsatz im verbreiterten Behälterstrom mit geringerer Geschwindigkeit transportiert werden als im ersten Transportabschnitt. Bevorzugt stehen die Behälter staudruckarm oder beabstandet zueinander. Folglich kann die mindestens eine Robotereinheit die einzelnen behandelten Behälter bei geringerer Transportgeschwindigkeit und/oder mit reduziertem Staudruck aus- bzw. einschleusen, ohne dass andere behandelte Behälter des zweiten Transportabschnitts davon berührt wären. Darüber hinaus kann die maximale Bewegungsgeschwindigkeit der mindestens einen Robotereinheit durch die geringere Transportgeschwindigkeit reduziert werden. Folglich ist es mit der erfindungsgemäßen Behälterbehandlungsanlage selbst bei hoher Leistung möglich, eine an sich flexibel steuerbare Robotereinheit mit einem geringen Platzbedarf zum Ein- und Ausschleusen einzusetzen. Zudem ist die mindestens eine Robotereinheit mit einem geringeren Aufwand verbunden als ein Bypass.

Die Behälterbehandlungsanlage kann dazu ausgebildet sein, ein fließfähiges Produkt, insbesondere ein Getränk in die Behälter abzufüllen, die befüllten Behälter nachfolgend zu verschließen und/oder zu verpacken. Das wenigstens eine Behandlungsaggregat kann eine Behälterherstellungsmaschine (beispielsweise eine Streckblasmaschine), einen Rinser, eine Etikettiermaschine, eine Direktdruckmaschine, einen Füller, einen Verschließer und/oder eine Verpackungsmaschine für die Behälter umfassen.

Die Behälter können dazu vorgesehen sein, Getränke, Lebensmittel, Hygieneartikel, Pasten, chemische, biologische und/oder pharmazeutische Produkte aufzunehmen. Insbesondere können die Behälter dazu vorgesehen sein, ein fließfähiges Produkt aufzunehmen, beispielsweise ein Getränk. Die Behälter können Kunststoffflaschen, Glasflaschen, Dosen und/oder Tuben sein. Bei Kunststoffbehältern kann es sich im Speziellen um PET-, PEN-, HD-PE- oder PP-Behälter bzw. - Flaschen handeln. Ebenso kann es sich um biologisch abbaubare Behälter oder Flaschen handeln, deren Hauptbestandteile aus nachwachsenden Rohstoffen wie zum Beispiel Zuckerrohr, Weizen oder Mais bestehen. Die Behälter können bei der Inspektion mit der wenigstens einen Inspektionsvorrichtung leer, teilweise befüllt oder vollständig befüllt sein.

Die Transporteinrichtung kann einen Lineartransporteur und/oder ein Karussell umfassen. Beispielsweise kann der erste Transportabschnitt ein Karussell eines Füllers und/oder eines Verschließers und/oder einen dem Füller und/oder Verschließer nachgeordneten Lineartransporteur umfassen. Der zweite Transportabschnitt kann einen Lineartransporteur umfassen, insbesondere um die behandelten Behälter darauf wenigstens teilweise nebeneinander stehend zu transportieren. Der erste Transportabschnitt und/oder der zweite Transportabschnitt können jeweils durch einen oder mehrere Transporteure gebildet werden, wie beispielsweise durch einen Lineartransporteur und/oder ein Karussell. Denkbar ist, dass die Transporteinrichtung Leitelemente umfasst, um die Behälter wenigstens beim Übergang vom ersten Transportabschnitt auf den zweiten Transportabschnitt zu führen. Vorzugsweise kann der zweite Transportabschnitt dazu ausgebildet sein, die Behälter im Betrieb mit der gegenüber dem ersten Transportabschnitt reduzierten Geschwindigkeit und/oder dem demgegenüber reduzierten Staudruck zu transportieren. Denkbar ist, dass an einem Übergang vom ersten Transportabschnitt auf den zweiten Transportabschnitt jeweils ein Lineartransporteur angeordnet ist, wobei der Lineartransporteur des zweiten Transportabschnitts breiter ausgebildet ist, als der Lineartransporteur des ersten Transportabschnitts. Bei einem Lineartransporteur kann es sich beispielsweise um ein Förderband handeln, insbesondere um ein flexibles Band oder um eine Transportkette. Denkbar ist auch, dass ein Lineartransporteur wenigstens teilweise den ersten und zweiten Transportabschnitt bildet und sich verbreitert. Dass der zweite Transportabschnitt dem ersten Transportabschnitt nachgeordnet ist, kann hier bedeuten, dass dieser dem ersten Transportabschnitt folgt. Ebenso kann dies bedeuten, dass der zweite Transportabschnitt entlang eines Behälterstroms stromabwärts des ersten Transportabschnitts angeordnet ist. Ist nachfolgend von einem zweiten Transportabschnitt die Rede, kann damit immer auch ein dem zweiten Abschnitt folgender Transportabschnitt gemeint sein.

Die mindestens eine Robotereinheit kann einen Roboterarm umfassen, der insbesondere als Delta-Roboter, Scara-Roboter oder als Knickarmroboter ausgebildet ist. Denkbar ist, dass die mindestens eine Robotereinheit kameragesteuert ausgebildet ist und/oder mindestens eine Kamera umfasst, um wenigstens die einzelnen behandelten Behälter zu erfassen. Die Kamera kann als 3D-Kamera ausgebildet sein, beispielsweise als Stereokamera oder als Time-of-Flight-Kamera.

Mit "Ausschleusen" kann hier gemeint sein, dass die einzelnen behandelten Behälter mit der mindestens einen Robotereinheit stichprobenartig aus einem Hauptproduktstrom entnommen werden. Mit "Einschleusen" kann gemeint sein, dass wenigstens ein Teil der einzelnen behandelten Behälter nach der Inspektion durch die wenigstens eine Inspektionsvorrichtung in den Hauptproduktstrom zurückgeführt wird, insbesondere diejenigen Behälter, die durch die Inspektion nicht beeinträchtigt werden.

Die wenigstens eine Inspektionsvorrichtung kann dazu vorgesehen sein, den Behälterinhalt, den Leer- und/oder Vollbehälter, einen Behälterverschluss, ein Etikett und/oder einen Behälteraufdruck zu inspizieren. Beispielsweise kann die wenigstens eine Inspektionsvorrichtung dazu vorgesehen sein, ein in die behandelten Behälter abgefülltes Produkt zu inspizieren, insbesondere hinsichtlich seiner Zusammensetzung. Denkbar ist auch, dass die wenigstens eine Inspektionsvorrichtung dazu vorgesehen ist, Eigenschaften wie einen Innendruck und/oder einen Verschluss-Aufdrehwert und/oder ein Gewicht bzw. Nettogewicht eines behandelten Behälters zu erfassen. Die wenigstens eine Inspektionsvorrichtung kann einen Sensor, eine Kamera, eine Waage und dergleichen umfassen. Insbesondere ist die wenigstens eine Inspektionsvorrichtung zur Offline-Inspektion ausgeführt. Mit Offline-Inspektion kann hier gemeint sein, dass die behandelten Behälter damit nur stichprobenartig inspiziert werden.

Denkbar ist, dass die Behälterbehandlungsanlage weitere Inspektionsstationen zur Onlineinspektion vorzugsweise am ersten Transportabschnitt umfasst, um alle behandelten Behälter zu inspizieren.

Der erste Transportabschnitt kann zum Transport eines einreihigen Behälterstroms und der zweite Transportabschnitt kann zum Transport des verbreiterten, insbesondere des mehrreihigen Behälterstroms ausgebildet sein. Üblicherweise werden die Behälter bei der Behandlung mit dem wenigsten einen Behandlungsaggregat als einreihiger Behälterstrom transportiert, beispielsweise in dem Füller oder in dem Verschließer. Folglich kann dann mit dem mehrreihigen Behälterstrom derselbe Durchsatz bei der reduzierten Geschwindigkeit erzielt werden.

Die mindestens eine Robotereinheit kann einen Roboterarm mit einem Greifer für wenigstens einen der einzelnen behandelten Behälter umfassen. Dadurch können die einzelnen behandelten Behälter individuell aus dem verbreiterten Behälterstrom aus- und/oder darin wieder eingeschleust werden. Denkbar ist auch, dass mit dem Greifer mehrere Behälter gleichzeitig aus- und/oder eingeschleust werden können. Der Greifer kann an einem bewegbaren Ende des Roboterarms angeordnet sein. Der Greifer kann dazu ausgebildet sein, einen der Behälter am Mündungsbereich aufzunehmen.

Der zweite Transportabschnitt kann quer zu seiner Transportrichtung wenigstens teilweise breiter als der verbreiterte Behälterstrom ausgebildet sein, so dass im Betrieb zumindest zeitweise ein Freiraum neben dem verbreiterten Behälterstrom zum Ein- und/oder Ausschleusen der einzelnen behandelten Behälter entsteht. Dadurch können die einzelnen behandelten Behälter ohne Kontakt zu den übrigen Behältern mit der mindestens einen Robotereinheit im Bereich des Freiraums des Transportabschnitts entnommen und/oder zugeführt werden.

Die mindestens eine Robotereinheit ist kann derart an dem zweiten Transportabschnitt und der wenigstens einen Inspektionsvorrichtung angeordnet, dass damit die einzelnen behandelten Behälter vom zweiten Transportabschnitt zur wenigstens einen Inspektionsvorrichtung hin ausschleusbar und/oder von der wenigstens einen Inspektionsvorrichtung zum zweiten Transportabschnitt hin einschleusbar sind. Anders ausgedrückt kann die mindestens eine Robotereinheit unmittelbar am zweiten Transportabschnitt angeordnet sein.

Zudem kann die mindestens eine Robotereinheit derart angeordnet sein, dass sie die einzelnen behandelten Behälter direkt an der wenigstens einen Inspektionsvorrichtung abgibt und/oder aufnimmt. Denkbar ist auch, dass zwischen der mindestens einen Robotereinheit und der wenigstens einen Inspektionsvorrichtung ein Zwischenspeicher für die einzelnen behandelten Behälter angeordnet ist. Denkbar ist ebenfalls, dass ausgeschleuste Behälter für eine genauere und/oder spätere Messung z.B. in einem Labor zur Verfügung gestellt werden.

Die Transporteinrichtung kann einen dritten Transportabschnitt umfassen, der als Bypass zwischen der Weiche zum Ausschleusen wenigstens eines Teils der einzelnen behandelten Behälter und der wenigstens einen Inspektionsvorrichtung ausgebildet ist, wobei die mindestens eine Robotereinheit derart zwischen der wenigstens einen Inspektionsvorrichtung und dem zweiten Transportabschnitt angeordnet ist, dass der mit dem Bypass ausgeschleuste Teil der einzelnen behandelten Behälter nach der wenigstens einen Inspektionsvorrichtung in den verbreiterten Behälterstrom wieder einschleusbar ist. Dadurch kann die mindestens eine Robotereinheit mit dem Bypass kombiniert werden und ist so besonders flexibel einzusetzen. Beispielsweise kann der Bypass derart angeordnet sein, dass er den Teil der einzelnen behandelten Behälter von dem ersten Transportabschnitt über die Weiche zu einer ersten Inspektionsvorrichtung hin ausschleust. Die mindestens eine Robotereinheit kann derart angeordnet sein, dass sie die inspizierten Behälter von der ersten Inspektionsvorrichtung wenigstens teilweise am zweiten Transportabschnitt in den verbreiterten Behälterstrom einschleust. Denkbar ist auch, dass dieselbe Robotereinheit dazu ausgebildet ist, einen anderen Teil der einzelnen behandelten Behälter aus dem verbreiterten Behälterstrom vom zweiten Transportabschnitt zu einer zweiten Inspektionsvorrichtung hin auszuschleusen und nach der Inspektion wieder am zweiten Transportabschnitt in den verbreiterten Behälterstrom einzuschleusen. Dadurch kann die Behälterbehandlungsanlage noch flexibler arbeiten.

Wenigstens eine Kamera kann an der Transporteinrichtung angeordnet sein, um Transportwege einzelner behandelter Behälter jeweils vor dem Ausschleusen derart in deren Kamerabilder zu verfolgen, dass eine Zuordnung der einzelnen behandelten Behälter zu einem von mehreren Behandlungsorgangen des wenigstens einen Behandlungsaggregats möglich ist, beispielsweise zu einem von mehreren Füllventilen. Dadurch kann ein Inspektionsergebnis eines Behälters trotz des verbreiterten Behälterstroms einem bestimmten Behandlungsorgan zugeordnet und so die Wartung unterstützt werden. Üblicherweise können die Behälter des ersten Transportabschnitts bei einem einreihigen Behälterstrom allein aufgrund ihrer sequentiellen Abfolge dem jeweiligen Behandlungsorgan zugeordnet werden. Durch die wenigstens eine Kamera ist das auch bei dem verbreiterten Behälterstrom möglich, indem die Transportwege der einzelnen behandelten Behälter verfolgt werden. Denkbar ist, dass die wenigstens eine Kamera eine Bildverarbeitungseinrichtung umfasst oder damit verbunden ist, um die Transportwege in einer Vielzahl von Kamerabildern zu ermitteln und dadurch zu verfolgen.

Es ist auch möglich, dass eine Zuordnung zu einer Behandlungseinrichtung durch eine Kodierung der Behälter und/oder der Etikettierung der Behälter und der Erkennung der Kodierung erfolgt.

Darüber hinaus stellt die Erfindung zur Lösung der Aufgabenstellung ein Behälterbehandlungsverfahren für Behälter mit den Merkmalen des Anspruchs 7 bereit. Vorteilhafte Ausführungsformen der Erfindung sind in den Unteransprüchen genannt.

Dadurch, dass die behandelten Behälter im zweiten Transportabschnitt als gegenüber dem ersten Transportabschnitt verbreiterten Behälterstrom transportiert werden, können die behandelten Behälter bei gleichem Durchsatz im verbreiterten Behälterstrom mit geringerer Geschwindigkeit transportiert werden als im ersten Transportabschnitt. Folglich kann die mindestens eine Robotereinheit die einzelnen behandelten Behälter bei geringerer Transportgeschwindigkeit und/oder mit reduziertem oder ohne Staudruck aus- bzw. einschleusen, ohne dass andere behandelte Behälter des zweiten Transportabschnitts davon nachteilig berührt wären. Darüber hinaus kann die maximale Bewegungsgeschwindigkeit der mindestens einen Robotereinheit durch die geringere Transportgeschwindigkeit reduziert werden. Folglich ist es mit der erfindungsgemäßen Behälterbehandlungsanlage selbst bei hoher Leistung möglich, eine an sich flexibel steuerbare Robotereinheit mit einem geringen Platzbedarf zum Ein- und Ausschleusen einzusetzen. Zudem ist die mindestens eine Robotereinheit mit einem geringeren Aufwand verbunden als ein Bypass.

Die einzelnen behandelten Behälter werden in einem ersten Schritt aus dem verbreiterten Behälterstrom von der mindesten einen Robotereinheit ausgeschleust, dann in einem zweiten Schritt mit der Inspektionsvorrichtung inspiziert werden, und dann in einem dritten Schritt von der mindestens einen Robotereinheit wenigstens teilweise in den verbreiterten Behälterstrom eingeschleust werden.

Die Behälter können im ersten Transportabschnitt einreihig und im zweiten Transportabschnitt mehrreihig oder in Gassen geführt transportiert werden. Üblicherweise werden die Behälter bei der Behandlung mit dem wenigsten einen Behandlungsaggregat einreihig transportiert, beispielsweise beim Füllen oder Verschließen. Folglich kann dann mit dem mehrreihigen Transport derselbe Durchsatz bei der reduzierten Geschwindigkeit erzielt werden.

Die einzelnen behandelten Behälter können mit der mindestens einen Robotereinheit zunächst quer zum verbreiterten Behälterstrom in einen Freiraum des zweiten Transportabschnitts bewegt und dann ausgeschleust werden. Dadurch können die einzelnen behandelten Behälter zunächst von einem Kontakt mit den übrigen Behältern gelöst und dann im Freiraum ausgeschleust werden. Folglich wird der verbreiterte Behälterstrom beim Ausschleusen nur in einem geringen Maß beeinträchtigt, so dass ein Stau vermieden wird. Denkbar ist, dass die einzelnen behandelten Behälter beim Ausschleusen mit der mindestens einen Robotereinheit zunächst quer und/oder längs zu einer Transportrichtung des zweiten Transportabschnitts in den Freiraum bewegt und dann abgehoben werden.

Die einzelnen behandelten Behälter können mit der mindestens einen Robotereinheit zunächst in einem Freiraum des zweiten Transportabschnitts quer zum verbreiterten Behälterstrom eingeschleust und dann mit dem verbreiterten Behälterstrom zusammengeführt werden. Dadurch werden die einzelnen behandelten Behälter zunächst ohne Kontakt mit dem verbreiterten Behälterstrom eingeschleust und erst dann mit dem verbreiterten Behälterstrom zusammengeführt. Folglich wird der verbreiterte Behälterstrom beim Einschleusen nur in einem geringen Maß beeinträchtigt, so dass ein Stau vermieden wird. Denkbar ist, dass die einzelnen behandelten Behälter zunächst mit der mindestens einen Robotereinheit im Freiraum abgestellt und dann mit einem Leitelement mit dem verbreiterten Behälterstrom zusammengeführt werden.

Wenigstens ein Teil der einzelnen behandelten Behälter kann mit einer Weiche ausgeschleust und über einen Bypass zu der wenigstens einen Inspektionsvorrichtung transportiert und dort inspiziert werden, wobei der wenigstens eine Teil der einzelnen behandelten Behälter nach der Inspektion mit der mindestens einen Robotereinheit an dem zweiten Transportabschnitt wieder eingeschleust werden kann. Dadurch kann die mindestens eine Robotereinheit mit dem Bypass kombiniert werden und ist so besonders flexibel einzusetzen. Denkbar ist, dass ein erster Teil der einzelnen behandelten Behälter mit einer Weiche ausgeschleust und über einen Bypass zu einer ersten Inspektionsvorrichtung transportiert und dort inspiziert wird, wobei ein zweiter Teil der einzelnen behandelten Behälter am zweiten Transportabschnitt ausgeschleust und einer zweiten Inspektionsvorrichtung zugeführt und dort inspiziert wird, und wobei der erste Teil und der zweite Teil der einzelnen behandelten Behälter nach der Inspektion mit der mindestens einen Robotereinheit an dem zweiten Transportabschnitt wieder eingeschleust wird. Zumindest ein Teil der Behälter kann z.B. zwecks weiterer Untersuchung in einem Labor von der mindestens einen Robotereinheit z.B. in einem geeigneten Behälter bereitgestellt werden.

Transportwege der einzelnen behandelten Behälter können jeweils mit wenigstens einer Kamera vor dem Ausschleusen verfolgt werden, wobei die einzelnen behandelten Behälter aufgrund der verfolgten Transportwege jeweils einem von mehreren Behandlungsorganen des Behandlungsaggregats zugeordnet werden, beispielsweise einem von mehreren Füllventilen. Dadurch kann ein Inspektionsergebnis eines Behälters trotz des verbreiterten Behälterstroms einem bestimmten Behandlungsorgan zugeordnet und so die Wartung unterstützt werden. Denkbar ist, dass Kamerabilder der wenigstens einen Kamera mit einer Bildverarbeitungseinrichtung hinsichtlich der Positionen der einzelnen Behälter am ersten und/oder zweiten Transportabschnitt ausgewertet werden, um die Transportwege zu verfolgen.

Weitere Merkmale und Vorteile der Erfindung werden nachfolgend anhand des in den Figuren dargestellten Ausführungsbeispiels näher erläutert. Dabei zeigt:
- Figur 1: ein erfindungsgemäßes Ausführungsbeispiel einer Behälterbehandlungsanlage für Behälter in einer Draufsicht;
- Figur 2A: eine Detaildarstellung der Behälterbehandlungsanlage aus der Figur 1 beim Ausschleusen von einzelnen behandelten Behältern zu einer ersten Inspektionsvorrichtung mit der Robotereinheit;
- Figur 2B: eine Detaildarstellung der Behälterbehandlungsanlage aus der Figur 1 beim Einschleusen der einzelnen behandelten Behälter von der ersten Inspektionsvorrichtung her mit der Robotereinheit; und
- Figur 2C: eine Detaildarstellung der Behälterbehandlungsanlage aus der Figur 1 beim Ausschleusen eines Teils von einzelnen behandelten Behältern mit einer Weiche und einem Bypass zu einer zweiten Inspektionsvorrichtung und beim Einschleusen der inspizierten Behälter mit der Robotereinheit.

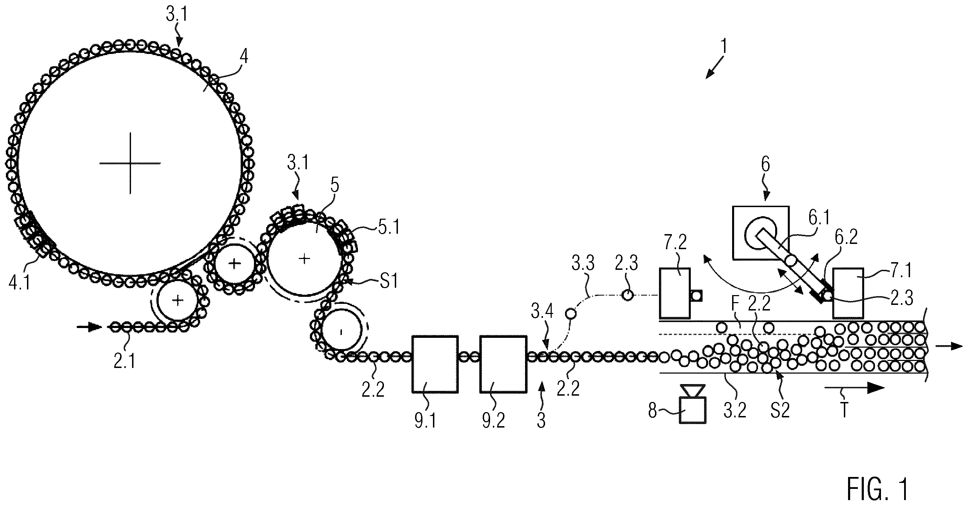

In der Figur 1 ist ein erfindungsgemäßes Ausführungsbeispiel einer Behälterbehandlungsanlage 1 für Behälter 2.1 - 2.3 in einer Draufsicht dargestellt. Zu sehen ist, dass die Behälterbehandlungsanlage 1 zwei Behandlungsaggregate 4 und 5 zur Behandlung der Behälter 2.1 umfasst, die hier lediglich beispielhaft als Füller bzw. Verschließer ausgebildet sind, um die Behälter 2.1 mit einem Getränk zu befüllen und zu verschließen. Denkbar ist auch, dass die Behälterbehandlungsanlage 1 lediglich ein Behandlungsaggregat umfasst.

Das erste Behandlungsaggregat 4 umfasst mehrere Behandlungsorgane 4.1 an einem Transportkarussell, die hier als Füllorgane ausgebildet sind, um mehrere Behälter 2.1 gleichzeitig während des Transports mit dem Getränk zu befüllen. Entsprechend umfasst das zweite Behandlungsaggregat 5 mehrere Behandlungsorgane 5.1 an einem weiteren Transportkarussell, die hier als Verschließköpfe ausgebildet sind, um die befüllten Behälter 2.1 mit einem Verschluss zu versehen, beispielsweise mit einem Kronkorken. Die so behandelten Behälter 2.2 werden nachfolgend einer Inspektion mit den Online-Inspektionsstationen 9.1, 9.2, sowie einzelne behandelte Behälter 2.3 den Offline-Inspektionsvorrichtungen 7.1, 7.2 zugeführt.

Zu sehen ist also, dass den beiden Behandlungsaggregaten 4, 5 beispielhaft zwei Inspektionsstationen 9.1, 9.2 zur Onlineinspektion und zwei Inspektionsvorrichtungen 7.1, 7.2 zur Offlineinspektion nachgeordnet sind. Mit den Online-Inspektionsstationen 9.1, 9.2 wird beispielsweise die Füllhöhe und der Verschlusssitz aller behandelter Behälter 2.2 inspiziert. Demgegenüber werden die einzelnen behandelten Behälter2.3 mit den Inspektionsvorrichtungen 7.1, 7.2 nur stichprobenartig inspiziert.

Ferner umfasst die Behälterbehandlungsanlage 1 die Transporteinrichtung 3 mit dem ersten Transportabschnitt 3.1 und dem zweiten Transportabschnitt 3.2, wobei die beiden Behandlungsaggregate 4, 5 sowie die Inspektionsstationen 9.1, 9.2 am ersten Transportabschnitt 3.1 und die Inspektionsvorrichtungen 7.1, 7.2 am zweiten Transportabschnitt 3.2 angeordnet sind.

Der erste Transportabschnitt 3.1 der Transporteinrichtung 3 wird hier lediglich beispielhaft durch mehrere Transporteure gebildet, insbesondere durch die Transportkarussells der beiden Behandlungsaggregate 4, 5, mehrere Transportsterne und durch einen Lineartransporteur, an dem die Inspektionsstationen 9.1, 9.2 zur Onlineinspektion angeordnet sind. Mit dem ersten Transportabschnitt 3.1 werden die Behälter 2.1 bei der Behandlung, sowie die behandelten Behälter 2.2 bei der Inspektion als einreihiger Behälterstrom S1 transportiert.

Weiter ist zu sehen, dass sich der zweite Transportabschnitt 3.1 dem ersten Transportabschnitt 3.2 anschließt und von einem weiteren Lineartransporteur gebildet wird, beispielsweise von einem Förderband. Daran ist die Robotereinheit 6 angeordnet, um einzelne behandelte Behälter 2.3 aus- und/oder einzuschleusen. Denkbar ist jedoch auch, dass bei den Fig. 1 - 2C eine oder mehrere weitere Robotereinheiten 6 an dem zweiten Transportabschnitt 3.1 zum Aus- und/oder Einschleusen einzelner behandelter Behälter 2.3 angeordnet sind, beispielsweise, um sie zu weiteren Inspektionsvorrichtungen aus- und/oder einzuschleusen.

Der zweite Transportabschnitt 3.2 ist zum Transport eines gegenüber dem ersten Transportabschnitt 3.1 verbreiterten, insbesondere mehrreihigen Behälterstroms S2 ausgebildet, so dass dort einzelne behandelte Behälter 2.3 beim Aus- und/oder Einschleusen mit reduzierter Geschwindigkeit und/oder reduziertem oder ohne Staudruck transportiert werden. Die Robotereinheit 6 umfasst einen Roboterarm 6.1 mit dem Greifer 6.2, um einen der einzelnen behandelten Behälter 2.3 aus dem verbreiterten Behälterstrom S2 auszuschleusen und der ersten Inspektionsvorrichtung 7.1 zuzuführen oder um sie nach der Inspektion durch die erste Inspektionsvorrichtung 7.1 oder die zweite Inspektionsvorrichtung 7.2 wieder in den verbreiterten Behälterstrom S2 einzuschleusen.

Um die einzelnen behandelten Behälter 2.3 jeweils den Behandlungsorganen 4.1, 5.1 der beiden Behandlungsaggregate 4, 5 zuzuordnen, ist zudem an der Transporteinrichtung 3 die Kamera 8 angeordnet. Diese erfasst die Behälter 2.2, 2.3 im Bereich des zweiten Transportabschnitts als Kamerabilder die anschließend mit einer hier nicht dargestellten Bildverarbeitungseinrichtung ausgewertet werden, um die Transportwege der einzelnen behandelten Behälter 2.3 bis zum Ausschleusen mit der Robotereinheit 6 zu verfolgen. Dementsprechend kann dann ein Inspektionsergebnis einem der Behandlungsorgane 4.1, 5.1 zugeordnet werden.

Ein Teil der einzelnen behandelten Behälter 2.3 wird zur zweiten Inspektionsvorrichtung 7.2 nicht mit der Robotereinheit 6 ausgeschleust, sondern über die Weiche 3.4 und einen als Bypass ausgebildeten, dritten Transportabschnitt 3.3. Dabei ist die Weiche 3.4 am ersten Transportabschnitt 3.1 angeordnet, um den Teil der einzelnen behandelten Behälter 2.3 stichprobenartig zur zweiten Inspektionsvorrichtung hin auszuschleusen. Die davon inspizierten Behälter 2.3 werden mittels der Robotereinheit 6 in den verbreiterten Behälterstrom S2 am zweiten Transportabschnitt 3.2 eingeschleust.

Anders ausgedrückt, ist die Robotereinheit 6 derart zwischen dem zweiten Transportabschnitt 3.1 und der ersten Inspektionsvorrichtung 7.1 angeordnet, dass damit die einzelnen behandelten Behälter 2.3 vom zweiten Transportabschnitt 3.2 zur wenigstens einen Inspektionsvorrichtung 7.1, 7.2 hin ausschleusbar und/oder von der ersten und der zweiten Inspektionsvorrichtung 7.1, 7.2 zum zweiten Transportabschnitt (3.2) hin einschleusbar sind.

Denkbar ist jedoch auch, dass nur eine der beiden Inspektionsvorrichtung 7.1, 7.2 vorhanden ist oder, dass der dritte Transportabschnitt 3.3 wegfällt und die einzelnen behandelten Behälter 2.3 mit der Robotereinheit 6 vom zweiten Transportabschnitt 3.2 zu beiden Inspektionsvorrichtungen 7.1, 7.2 hin ausgeschleust werden.

Die Behälterbehandlungsanlage 1 in der Figur 1 wird wie folgt eingesetzt: Die Behälter 2.1 - 2.3 werden mit der Transporteinrichtung 3 transportiert, wobei die Behälter 2.1 - 2.3 von den Behandlungsaggregaten 4, 5 oder auch nur einem Behandlungsaggregat an dem ersten Transportabschnitt 3.1 der Transporteinrichtung 3 behandelt werden, wobei die Robotereinheit 6 danach einzelne behandelte Behälter 2.3 an dem zweiten Transportabschnitt 3.2 der Transporteinrichtung 3 aus- und/oder einschleust, und wobei die einzelnen behandelten Behälter 2.3 mit den Inspektionsvorrichtungen 7.1, 7.2 oder auch nur einer Inspektionsvorrichtung inspiziert werden.

Die behandelten Behälter 2.2 werden am zweiten Transportabschnitt 3.2 als gegenüber dem ersten Transportabschnitt 3.1 verbreiterter Behälterstrom S2 transportiert, so dass dort die einzelnen behandelten Behälter 2.3 beim Aus- und/oder Einschleusen mit reduzierter Geschwindigkeit und/oder reduziertem Staudruck transportiert werden.

Dadurch, dass der zweite Transportabschnitt 3.2 zum Transport eines gegenüber dem ersten Transportabschnitt 3.1 verbreiterten Behälterstroms S2 ausgebildet ist, können die behandelten Behälter 2.2 bei gleichem Durchsatz im verbreiterten Behälterstrom S2 mit geringerer Geschwindigkeit transportiert werden als im ersten Transportabschnitt 3.1. Der verbreiterte Behälterstromermöglicht es, selbst bei der verringerten Geschwindigkeit den gleichen maximalen Durchsatz über den zweiten Transportabschnitt 3.2 wie über den ersten Transportabschnitt 3.1 zu transportieren. Die behandelten Behälter2.2 können im zweiten Transportabschnitt 3.2 seitlich etwas auseinander gezogen transportiert werden, um den Staudruck zu reduzieren oder zu vermeiden. Folglich kann die Robotereinheit 6 die einzelnen behandelten Behälter 2.3 bei geringerer Transportgeschwindigkeit und/oder mit reduziertem Staudruck aus- bzw. einschleusen, ohne dass andere behandelte Behälter 2.2 des zweiten Transportabschnitts 3.2 davon berührt würden. Darüber hinaus kann die maximale Bewegungsgeschwindigkeit der Robotereinheit 6 durch die geringere Transportgeschwindigkeit reduziert werden. Folglich ist es mit der erfindungsgemäßen Behälterbehandlungsanlage 1 selbst bei hoher Leistung möglich, eine an sich flexibel steuerbare Robotereinheit 6 mit einem geringen Platzbedarf zum Ein- und Ausschleusen einzusetzen. Zudem ist die Robotereinheit 6 mit einem geringeren Aufwand verbunden als beispielsweise ein Bypass.

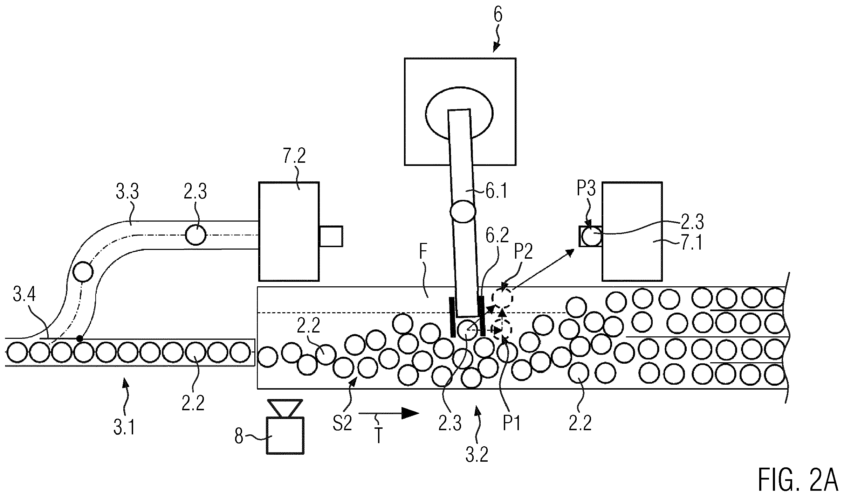

Das Aus- und Einschleusen der einzelnen behandelten Behälter 2.3 wird nachfolgend anhand der Figuren 2A - 2C genauer erläutert:
In der Figur 2A ist eine Detaildarstellung der Behälterbehandlungsanlage 1 aus der Figur 1 beim Ausschleusen von einzelnen behandelten Behältern 2.3 zur ersten Inspektionsvorrichtung 7.1 mit der Robotereinheit 6 dargestellt. Zu sehen ist, dass die behandelten Behälter 2.2 im ersten Transportabschnitt 3.1 einreihig, also sequenzielle hintereinander transportiert werden und dann an den zweiten Transportabschnitt 3.2 übergeben werden. Der zweite Transportabschnitt 3.2 ist hier breiter als der erste Transportabschnitt 3.1 ausgebildet, beispielsweise mit einem verbreiterten Förderband, auf dem die behandelten Behälter 2.1 stehend als verbreiterter Behälterstrom S2 transportiert werden. Nur beispielhaft wird der verbreiterte Behälterstrom S2 dann stromabwärts in einzelne Gassen aufgeteilt, um ihn einer nachfolgenden Verpackungsmaschine geordnet zuzuführen.

Zu sehen ist auch, dass sich die behandelten Behälter 2.2 aufgrund einer reduzierten Geschwindigkeit des zweiten Transportabschnitts 3.2 gegenüber dem ersten Transportabschnitt 3.1 auseinander drängeln und so den verbreiterten Behälterstrom S2 bilden. Dadurch lastet auf den Behältern ebenfalls ein zumindest reduzierter oder auch kein Staudruck.

Ferner ist zu sehen, dass der zweite Transportabschnitt 3.2 quer zu seiner Transportrichtung T breiter als der verbreiterte Behälterstrom S2 ausgebildet ist. Dadurch entsteht der Freiraum F neben dem verbreiterten Behälterstrom S2, in dem die einzelnen behandelten Behälter 2.3 mit der Robotereinheit 6 aus- und eingeschleust werden.

Dies erfolgt, wie in der Figur 2A zu sehen ist, in dem ein einzelner behandelter Behälter 2.3 mit dem Greifer 6.2 des Roboterarms 6.1 aufgegriffen und zunächst über die Position P1 neben den anderen Behältern 2.2 quer zur Transportrichtung T zur Position P2 in den Freiraum F bewegt wird. Dabei ist denkbar, dass der einzelne Behälter 2.3 nach wie vor durch das Förderband des Transportabschnitts 3.2 gestützt wird und mittels der Robotereinheit 6 lediglich darauf verschoben wird. Anschließend wird der einzelne behandelte Behälter 2.3 mit der Robotereinheit 6 angehoben und der ersten Inspektionsvorrichtung 7.1 an der Position P3 zugeführt. Dadurch, dass der Behälter 2.3 im Bereich des Freiraums F (Position P2) nicht von anderen behandelten Behälter 2.2 des verbreiterten Behälterstroms S2 berührt wird, kann er dort sicher seitlich entnommen werden. Es ist aber grundsätzlich auch möglich, einen Behälter 2.3 an jeder anderen Position zu entnehmen und dabei während dem Transport zunächst vertikal aus dem Behälterstrom S2 heraus zu bewegen. Der Behälterstrom S2 kann dabei auch gassengeführt sein, die Behälter also in mehreren durch Führungselemente getrennte Gassen parallel transportiert werden.

Anschließend wird der an der Position P3 dargestellte Behälter 2.3 mit der Inspektionsvorrichtung 7.1 inspiziert, beispielsweise auf einen korrekten CO₂-Gehalt hin.

Darüber hinaus wird der Transportweg des einzelnen behandelten Behälters 2.3 noch vor dem Ausschleusen mit der Kamera 8 verfolgt und einem der Behandlungsorgane 4.1, 5.1 der Behandlungsaggregate 4, 5 zugeordnet. Denkbar ist, dass die Zuordnung nur zu den Behandlungsorganen 4.1 (beispielsweise einem Füllventil) eines der Behandlungsaggregate 4, 5 (hier dem Füller) erfolgt. Es ist jedoch auch möglich, einen Behälter 2.3 den Behandlungsorganen 4.1, 5.1 der beiden Behandlungsaggregate 4, 5 zuzuordnen. Dadurch kann beispielsweise bestimmt werden, welches Füllventil und/oder welcher Verschließkopf schadhaft ist.

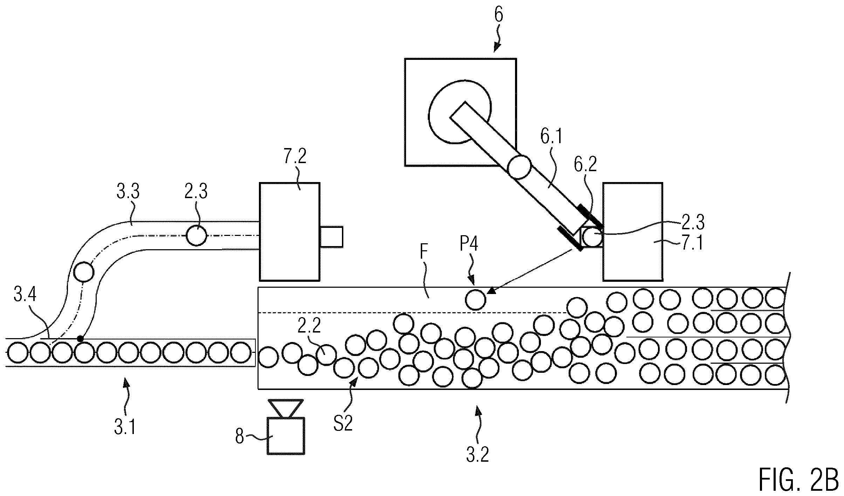

In der Figur 2B ist eine Detaildarstellung der Behälterbehandlungsanlage 1 aus der Figur 1 beim Einschleusen der einzelnen behandelten Behälter 2.3 von der ersten Inspektionsvorrichtung 7.1 her mit der Robotereinheit 6 zu sehen. Zu sehen ist, dass der einzelne behandelte Behälter 2.3 nach erfolgter Inspektion bei der ersten Inspektionsvorrichtung 7.1 mit dem Greifer 6.2 des Roboterarm 6.1 wieder aufgenommen und im Freiraum F des zweiten Transportabschnitts 3.2 an der Position P4 quer zum verbreiterten Behälterstrom S2 abgestellt wird. Dadurch, dass dort andere bereits behandelte Behälter 2.2 nicht den zurückgestellten Behälter 2.3 berühren, kann er dort sicher wieder eingeschleust werden.

Anschließend wird der inspizierte Behälter 2.3 wieder mit dem verbreiterten Behälterstrom S2 zusammengeführt, beispielsweise über hier nicht dargestellte Leitelemente.

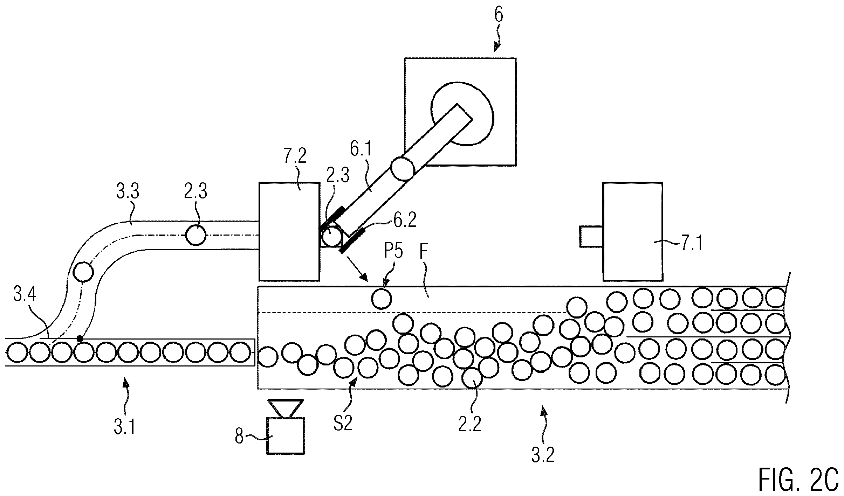

In der Figur 2C ist eine Detaildarstellung der Behälterbehandlungsanlage 1 aus der Figur 1 beim Ausschleusen eines Teils von einzelnen behandelten Behältern 2.3 mit einer Weiche 3.4 und einem dritten Transportabschnitt 3.3 (Bypass) zu einer zweiten Inspektionsvorrichtung 7.2 und beim Einschleusen der inspizierten Behälter 2.3 mit der Robotereinheit 6 dargestellt.

Zu sehen ist, dass einzelne behandelte Behälter 2.2 vom ersten Transportabschnitt 3.1 mittels der Weiche 3.4 ausgeschleust und mit dem dritten Transportabschnitt 3.3, also dem Bypass, direkt der zweiten Inspektionsvorrichtung 7.1 zugeführt werden. Nach der Inspektion werden die Behälter 2.3 mit dem Greifer 6.2 des Roboterarms 6.1 aufgenommen und im Freiraum F des zweiten Transportabschnitts 3.2 an der Position P5 quer zum verbreiterten Behälterstrom S2 eingeschleust, also ähnlich wie bei der Figur 2B.

Folglich kann das Ausschleusen durch einen Bypass 3.3 auch mit dem Einschleusen mit Hilfe der Robotereinheit 6 kombiniert werden. Dadurch kann die Behälterbehandlungsanlage 1 bzw. das Behälterbehandlungsverfahren noch flexibler eingesetzt werden.

## Patentansprüche

1. Behälterbehandlungsanlage (1) für Behälter (2.1, 2.2, 2.3), mit
- einer Transporteinrichtung (3) zum Transport der Behälter (2.1, 2.2, 2.3),
- wenigstens einem Behandlungsaggregat (4, 5) zur Behandlung der Behälter (2.1, 2.2, 2.3) an einem ersten Transportabschnitt (3.1) der Transporteinrichtung (3),
- mindestens einer Robotereinheit (6) zum Aus- und/oder Einschleusen einzelner behandelter Behälter (2.3) an einem zweiten Transportabschnitt (3.2) der Transporteinrichtung (3), der dem ersten Transportabschnitt (3.1) nachgeordnet ist, und
- mit wenigstens einer Inspektionsvorrichtung (7.1, 7.2) zur Inspektion der einzelnen behandelten Behälter (2.3),
**dadurch gekennzeichnet, dass**
der zweite Transportabschnitt (3.2) zum Transport eines gegenüber dem ersten Transportabschnitt (3.1) verbreiterten Behälterstroms (S2) ausgebildet ist, so dass dort die einzelnen behandelten Behälter (2.3) beim Aus- und/oder Einschleusen mit reduzierter Geschwindigkeit und/oder reduziertem Staudruck transportierbar sind, und
dass die mindestens eine Robotereinheit (6) derart zwischen dem zweiten Transportabschnitt (3.1) und der wenigstens einen Inspektionsvorrichtung (7.1, 7.2) angeordnet ist, dass damit die einzelnen behandelten Behälter (2.3) vom zweiten Transportabschnitt (3.2) zur wenigstens einen Inspektionsvorrichtung (7.1, 7.2) hin ausschleusbar und/oder von der wenigstens einen Inspektionsvorrichtung (7.1, 7.2) zum zweiten Transportabschnitt (3.2) hin einschleusbar sind.

2. Behälterbehandlungsanlage (1) nach Anspruch 1, wobei der erste Transportabschnitt (3.1) zum Transport eines einreihigen Behälterstroms (S1) und der zweite Transportabschnitt (3.2) zum Transport des verbreiterten, insbesondere mehrreihigen Behälterstroms (S2) ausgebildet sind.

3. Behälterbehandlungsanlage (1) nach Anspruch 1 oder 2, wobei die mindestens eine Robotereinheit (6) einen Roboterarm (6.1) mit einem Greifer (6.2) für wenigstens einen der einzelnen behandelten Behälter (2.3) umfasst.

4. Behälterbehandlungsanlage (1) nach einem der vorangegangenen Ansprüche, wobei der zweite Transportabschnitt (3.2) quer zu seiner Transportrichtung (T) wenigstens teilweise breiter als der verbreiterte Behälterstrom (S2) ausgebildet ist, so dass im Betrieb zumindest zeitweise ein Freiraum (F) neben dem verbreiterten Behälterstrom (S2) zum Ein- und/oder Ausschleusen der einzelnen behandelten Behälter (2.3) entsteht.

5. Behälterbehandlungsanlage (1) nach einem der vorangegangenen Ansprüche, wobei die Transporteinrichtung (3) einen dritten Transportabschnitt (3.3) umfasst, der als Bypass zwischen einer Weiche (3.4) zum Ausschleusen wenigstens eines Teils der einzelnen behandelten Behälter (2.3) und der wenigstens einen Inspektionsvorrichtung (7.1, 7.2) ausgebildet ist, und wobei die mindestens eine Robotereinheit (6) derart zwischen der wenigstens einen Inspektionsvorrichtung (7.1, 7.2) und dem zweiten Transportabschnitt (3.2) angeordnet ist, dass der mit dem Bypass (3.3) ausgeschleuste Teil der einzelnen behandelten Behälter (2.3) nach der wenigstens einen Inspektionsvorrichtung (7.1, 7.2) in den verbreiterten Behälterstrom (S2) wieder einschleusbar sind.

6. Behälterbehandlungsanlage (1) nach einem der vorangegangenen Ansprüche, wobei wenigstens eine Kamera (8) an der Transporteinrichtung (3) angeordnet ist, um Transportwege der einzelnen behandelten Behälter (2.3) jeweils vor dem Ausschleusen derart in deren Kamerabilder zu verfolgen, dass eine Zuordnung der einzelnen behandelten Behälter (2.3) zu einem von mehreren Behandlungsorganen (4.1, 5.1) des wenigstens einen Behandlungsaggregats (4, 5) möglich ist, beispielsweise zu einem von mehreren Füllventilen.

7. Behälterbehandlungsverfahren für Behälter (2.1, 2.2, 2.3), wobei die Behälter (2.1, 2.2, 2.3) mit einer Transporteinrichtung (3) transportiert werden, wobei die Behälter (2.1, 2.2, 2.3) von wenigstens einem Behandlungsaggregat (4, 5) an einem ersten Transportabschnitt (3.1) der Transporteinrichtung (3) behandelt werden, wobei mindestens eine Robotereinheit (6) danach einzelne behandelte Behälter (2.3) an einem zweiten Transportabschnitt (3.2) der Transporteinrichtung (3) aus- und/oder einschleust, und wobei die einzelnen behandelten Behälter (2.3) mit wenigstens einer Inspektionsvorrichtung (7.1, 7.2) inspiziert werden,
**dadurch gekennzeichnet, dass**
die behandelten Behälter (2.2) im zweiten Transportabschnitt (3.2) als gegenüber dem ersten Transportabschnitt (3.1) verbreiterter Behälterstrom (S2) transportiert werden, so dass dort die einzelnen behandelten Behälter (2.3) beim Aus- und/oder Einschleusen mit reduzierter Geschwindigkeit und/oder reduziertem Staudruck transportiert werden, und
dass die einzelnen behandelten Behälter (2.3) in einem ersten Schritt aus dem verbreiterten Behälterstrom (S2) von der mindestens einen Robotereinheit (6) ausgeschleust werden, dann in einem zweiten Schritt mit der Inspektionsvorrichtung (7.1, 7.2) inspiziert werden, und dann in einem dritten Schritt von der mindestens einen Robotereinheit (6) wenigstens teilweise in den verbreiterten Behälterstrom (S2) eingeschleust werden.

8. Behälterbehandlungsverfahren nach Anspruch 7, wobei die Behälter (2.1, 2.2, 2.3) im ersten Transportabschnitt (3.1) einreihig und im zweiten Transportabschnitt (3.2) mehrreihig oder in Gassen geführt transportiert werden.

9. Behälterbehandlungsverfahren nach einem der Ansprüche 7 oder 8, wobei die einzelnen behandelten Behälter (2.3) mit der mindestens einen Robotereinheit (6) zunächst quer zum verbreiterten Behälterstrom (S2) in einen Freiraum (F) des zweiten Transportabschnitts (3.2) bewegt und dann ausgeschleust werden.

10. Behälterbehandlungsverfahren nach einem der Ansprüche 7 - 9, wobei die einzelnen behandelten Behälter (2.2) mit der mindestens einen Robotereinheit (6) zunächst in einem Freiraum (F) des zweiten Transportabschnitts (3.2) quer zum verbreiterten Behälterstrom (S2) eingeschleust und dann mit dem verbreiterten Behälterstrom (S2) zusammengeführt werden.

11. Behälterbehandlungsverfahren nach einem der Ansprüche 7 - 10, wobei wenigstens ein Teil der einzelnen behandelten Behälter (2.3) mit einer Weiche (3.4) ausgeschleust und über einen Bypass (3.3) zu der wenigstens einen Inspektionsvorrichtung (7.1, 7.2) transportiert und dort inspiziert wird, und wobei der wenigstens eine Teil der einzelnen behandelten Behälter (2.3) nach der Inspektion mit der mindestens einen Robotereinheit (6) an dem zweiten Transportabschnitt (3.2) wieder eingeschleust wird.

12. Behälterbehandlungsverfahren nach einem der Ansprüche 7 - 11, wobei Transportwege der einzelnen behandelten Behälter (2.3) jeweils mit wenigstens einer Kamera (8) vor dem Ausschleusen verfolgt werden, und wobei die einzelnen behandelten Behälter (2.3) aufgrund der verfolgten Transportwege jeweils einem von mehreren Behandlungsorganen (4.1, 5.1) des Behandlungsaggregats (4, 5) zugeordnet werden, beispielsweise einem von mehreren Füllventilen.

## Claims

1. Container treatment system (1) for containers (2.1, 2.2, 2.3), with
- a transport device (3) for transporting thethe containers (2.1, 2.2, 2.3),
- at least one treatment assembly (4, 5) for treating thethe containers (2.1, 2.2, 2.3) at a first transport section (3.1) of the transport device (3)),
- at least one robot unit (6) for channeling individual treated containers (2.3) out and/or in at a second transport section (3.2) of the transport device (3) which is arranged downstream of the first transport section (3.1), and
- with at least one inspection device (7.1, 7.2) for inspecting the individual treated containers (2.3),
**characterised in that,**
the second transport section (3.2) is configured to transport a container flow (S2) that is widened as compared to the first transport section (3.1), so that the individual treated containers (2.3) are transported there at reduced speed and/or with reduced dynamic pressure when being channeled out and/or in and
that the at least one robot unit (6) is arranged between the second transport section (3.1) and the at least one inspection device (7.1, 7.2) such that the individual treated containers (2.3) can be channeled out from the second transport section (3.2) to the at least one inspection device (7.1, 7.2) and/or can be channeled in from the at least one inspection device (7.1, 7.2) to the second transport section (3.2).

2. Container treatment system (1) according to claim 1, where the first transport section (3.1) is configured for transporting a single-row container flow (S1) and the second transport section (3.2.) for transporting the widened, in particular multi-row container flow (S2).

3. Container treatment system (1) according to claim 1 or 2, where the at least one robot unit (6) comprises a robotic arm (6.1) with a gripper (6.2) for at least one of the individual treated containers (2.3).

4. Container treatment system (1) according to one of the preceding claims, where the second transport section (3.2) is formed to be at least in part wider transverse to its transport direction (T) than the widened container flow (S2), so that a free space (F) arises at least temporarily during operation next to the widened container flow (S2) for channeling the individual treated containers (2.3) in and/or out.

5. Container treatment system (1) according to one of the preceding claims, where the transport device (3) comprises a third transport section (3.3) which is configured as a bypass between a track switch (3.4) for channeling out at least a portion of the individual treated containers (2.3) and the at least one inspection device (7.1, 7.2), and where the at least one robot unit (6) is arranged between the at least one inspection device (7.1, 7.2) and the second transport section (3.2) such that the portion of the individual treated containers (2.3) channeled out by the bypass (3.3) can be channeled in again into the widened container flow (S2) downstream of the at least one inspection device (7.1, 7.2).

6. Container treatment system (1) according to one of the preceding claims, where at least one camera (8) is arranged at the transport device (3) to track transport paths of individual treated containers (2.3) in their camera images before they are respectively channeled out in such a way that the individual treated containers (2.3) can be associated with one of several treatment organs (4.1, 5.1) of the at least one treatment assembly (4, 5), for example, with one of several filling valves.

7. Container treatment method for containers (2.1, 2.2, 2.3), where the containers (2.1, 2.2, 2.3) are transported with a transport device (3), where the containers (2.1, 2.2, 2.3) are treated by at least one treatment assembly (4, 5) at a first transport section (3.1) of the transport device (3), where at least one robot unit (6) subsequently channels individual treated containers (2.3) out and/or in at a second transport section (3.2) of the transport device (3), and where the individual treated containers (2.3) are inspected with at least one inspection device (7.1, 7.2)
**characterised in that**
the treated containers (2.2) are transported in the second transport section (3.2) as a container flow (S2) that is widened as compared to the first transport section (3.1), so that the individual treated containers (2.3) are transported there at reduced speed and/or with reduced dynamic pressure when being channeled out and/or in, and
that the individual treated containers (2.3) are channeled out from the widened container flow (S2) in a first step by the at least one robot unit (6), subsequently inspected with the inspection device (7.1, 7.2) in a second step, and then in a third step are channeled into the widened container flow (S2) at least in part by the at least one robot unit (6).

8. Container treatment method according to claim 7, where the containers (2.1, 2.2, 2.3) are transported in a single row in the first transport section (3.1) and in multiple rows or in aisles in the second transport section (3.2).

9. Container treatment method according to one of the claims 7 or 8, where the individual treated containers (2.3) are first moved by the at least one robot unit (6) transverse to the widened container flow (S2) into a free space (F) of the second transport section (3.2) and then channeled out.

10. Container treatment method according to one of the claims 7 - 9, where the individual treated containers (2.2) are first channeled in by the at least one robot unit (6) into a free space (F) of the second transport section (3.2) transverse to the widened container flow (S2) and then merged with the widened container flow (S2).

11. Container treatment method according to one of the claims 7 - 10, where at least a portion of the individual treated containers (2.3) is channeled out by a track switch (3.4) and transported via a bypass (3.3) to the at least one inspection device (7.1, 7.2) and inspected there, and where the at least one portion of the individual treated containers (2.3) is again channeled in by the at least one robot unit (6) at the second transport section (3.2) after inspection.

12. Container treatment method according to one of the claims 7 - 11, where transport paths of the individual treated containers (2.3) are each tracked with at least one camera (8) prior to being channeled out, and where the individual treated containers (2.3) are associated, based on the transport paths tracked, with one of several treatment organs (4.1, 5.1) of the treatment assembly (4, 5), for example, one of several filling valves.

## Revendications

1. Installation de traitement de récipients (1) destinée à des récipients (2.1, 2.2, 2.3), comprenant
- un dispositif de transport (3) permettant de transporter les récipients (2.1, 2.2, 2.3),
- au moins un groupe de traitement (4, 5) permettant de traiter les récipients (2.1, 2.2, 2.3) au niveau d'une première section de transport (3.1) du dispositif de transport (3),
- au moins une unité robotisée (6) permettant d'exclure et/ou d'inclure des récipients traités individuels (2.3) au niveau d'une deuxième section de transport (3.2) du dispositif de transport (3) qui est située en aval de la première section de transport (3.1), et
- au moins un dispositif d'inspection (7.1, 7.2) permettant d'inspecter les récipients traités individuels (2.3),
**caractérisé en ce que**
la deuxième section de transport (3.2) est conçue pour transporter un flux de récipients (S2) élargi par rapport à la première section de transport (3.1), de sorte que les récipients traités individuels (2.3) peuvent y être transportés à une vitesse réduite et/ou une pression dynamique réduite lors de l'exclusion et/ou de l'inclusion, et
la au moins une unité robotisée (6) est agencée entre la deuxième section de transport (3.1) et le au moins un dispositif d'inspection (7.1, 7.2) de telle manière que les récipients traités individuels (2.3) peuvent être exclus de la deuxième section de transport (3.2) vers le au moins un dispositif d'inspection (7.1, 7.2) et/ou peuvent être inclus par le au moins un dispositif d'inspection (7.1, 7.2) vers la deuxième section de transport (3.2).

2. Installation de traitement de récipients (1) selon la revendication 1, dans laquelle la première section de transport (3.1) est conçue pour transporter un flux de récipients (S1) sur une rangée et la deuxième section de transport (3.2) est conçue pour transporter le flux de récipients élargi, en particulier sur plusieurs rangées (S2).

3. Installation de traitement de récipients (1) selon la revendication 1 ou 2, dans laquelle la au moins une unité robotisée (6) comprend un bras robotisé (6.1) muni d'une pince (6.2) pour au moins un des récipients traités individuels (2.3).

4. Installation de traitement de récipients (1) selon l'une quelconque des revendications précédentes, dans laquelle la deuxième section de transport (3.2) est réalisée au moins partiellement plus large, transversalement par rapport à sa direction de transport (T), que le flux de récipients (S2) élargi, de sorte qu'un espace libre (F) est créé au moins temporairement à côté du flux de récipients (S2) élargi afin d'inclure et/ou d'exclure les récipients traités individuels (2.3) pendant le fonctionnement.

5. Installation de traitement de récipients (1) selon l'une quelconque des revendications précédentes, dans laquelle le dispositif de transport (3) comprend une troisième section de transport (3.3) qui est réalisée sous la forme d'une dérivation entre un aiguillage (3.4) permettant d'exclure au moins une partie des récipients traités individuels (2.3) et le au moins un dispositif d'inspection (7.1, 7.2), et dans laquelle la au moins une unité robotisée (6) est agencée entre le au moins un dispositif d'inspection (7.1, 7.2) et la deuxième section de transport (3.2) de telle manière que la partie des récipients traités individuels (2.3) qui a été exclue avec la dérivation (3.3) peut être inclue à nouveau dans le flux de récipients (S2) élargi après le au moins un dispositif d'inspection (7.1, 7.2).

6. Installation de traitement de récipients (1) selon l'une quelconque des revendications précédentes, dans laquelle au moins une caméra (8) est agencée au niveau du dispositif de transport (3) afin de suivre des trajets de transport des récipients traités individuels (2.3) sur leurs images de caméra, respectivement avant l'exclusion, de telle manière qu'il est possible d'affecter des récipients traités individuels (2.3) à un parmi plusieurs organes de traitement (4.1, 5.1) du au moins un groupe de traitement (4, 5), par exemple à une parmi plusieurs vannes de remplissage.

7. Procédé de traitement de récipients destiné à des récipients (2.1, 2.2, 2.3), dans lequel les récipients (2.1, 2.2, 2.3) sont transportés par un dispositif de transport (3), dans lequel les récipients (2.1, 2.2, 2.3) sont traités par au moins un groupe de traitement (4, 5) au niveau d'une première section de transport (3.1) du dispositif de transport (3), dans lequel au moins une unité robotisée (6) exclut et/ou inclut ensuite des récipients traités individuels (2.3) au niveau d'une deuxième section de transport (3.2) du dispositif de transport (3), et dans lequel les récipients traités individuels (2.3) sont inspectés grâce à au moins un dispositif d'inspection (7.1, 7.2), **caractérisé en ce que**
les récipients traités (2.2) sont transportés dans la deuxième section de transport (3.2) sous forme de flux de récipients (S2) élargi par rapport à la première section de transport (3.1), de sorte que les récipients traités individuels (2.3) y sont transportés à une vitesse réduite et/ou une pression dynamique réduite lors de l'exclusion et/ou de l'introduction, et
lors d'une première étape, les récipients traités individuels (2.3) sont exclus du flux de récipients (S2) élargi, grâce à la au moins une unité robotisée (6), puis, lors d'une deuxième étape, sont inspectés grâce au dispositif d'inspection (7.1, 7.2), puis, lors d'une troisième étape, sont inclus au moins partiellement dans le flux de récipients (S2) élargi, grâce à la au moins une unité robotisée (6).

8. Procédé de traitement de récipients selon la revendication 7, dans lequel les récipients (2.1, 2.2, 2.3) sont transportés sur une rangée, dans la première section de transport (3.1), et sur plusieurs rangées ou dans des couloirs, dans la deuxième section de transport (3.2).

9. Procédé de traitement de récipients selon l'une quelconque des revendications 7 ou 8, dans lequel les récipients traités individuels (2.3) sont d'abord déplacés, transversalement par rapport au flux de récipients (S2) élargi, dans un espace libre (F) de la deuxième section de transport (3.2) grâce à la au moins une unité robotisée (6), puis sont exclus.

10. Procédé de traitement de récipients selon l'une quelconque des revendications 7 à 9, dans lequel les récipients traités individuels (2.2) sont d'abord inclus, transversalement par rapport au flux de récipients (S2) élargi, dans un espace libre (F) de la deuxième section de transport (3.2) grâce à la au moins une unité robotisée (6), puis sont réunis au flux de récipients (S2) élargi.

11. Procédé de traitement de récipients selon l'une quelconque des revendications 7 à 10, dans lequel au moins une partie des récipients traités individuels (2.3) est exclue grâce à un aiguillage (3.4) et est transportée par l'intermédiaire d'une dérivation (3.3) vers le au moins un dispositif d'inspection (7.1, 7.2) et y est inspectée, et dans lequel la au moins une partie des récipients traités individuels (2.3) est introduite à nouveau par la au moins une unité robotisée (6) dans la deuxième section de transport (3.2) après l'inspection.

12. Procédé de traitement de récipients selon l'une quelconque des revendications 7 à 11, dans lequel des trajets de transport des récipients traités individuels (2.3) sont suivis avant l'exclusion respectivement grâce à au moins une caméra (8), et dans lequel les récipients traités individuels (2.3) sont affectés, en se basant sur les trajets de transport suivis, respectivement à un parmi plusieurs organes de traitement (4.1, 5.1) de l'unité de traitement (4, 5), par exemple à une parmi plusieurs vannes de remplissage.
